# EUROPÄISCHE PATENTSCHRIFT

(11) **EP 1 227 975 B1**
(45) Veröffentlichungstag und Bekanntmachung des Hinweises auf die Patenterteilung: **04.10.2006**
(21) Anmeldenummer: 00981160.5
(22) Anmeldetag: 06.11.2000
(51) Int. Cl.: B64C 3/14

(54) **VORRICHTUNG ZUR LEITUNG EINER GASSTRÖMUNG**
DEVICE FOR GUIDING A GAS FLOW
DISPOSITIF POUR CONDUIRE UN ECOULEMENT GAZEUX

(30) Priorität: 11.11.1999 DE 19954304
(43) Veröffentlichungstag der Anmeldung: 07.08.2002
(73) Patentinhaber: Meincke, Manfred, 21129 Hamburg (DE)
(72) Erfinder: Meincke, Manfred, 21129 Hamburg (DE)
(74) Vertreter: Klickow, Hans-Henning
(86) Internationale Anmeldenummer: PCT/DE2000/003875
(87) Internationale Veröffentlichungsnummer: WO 2001/034465

(56) Entgegenhaltungen:
- WO-A-93/12000
- WO-A-93/12001
- DE-U- 29 904 171

## Beschreibung

Die Erfindung betrifft eine Vorrichtung zur Leitung einer Gasströmung, die eine Grundstufe sowie mindestens eine Aufsatzstufe umfaßt und bei der einander zugewandte Bereiche der Grundstufe sowie der Aufsatzstufe relativ zueinander winklig verlaufende Außenkonturen aufweisen und die im Bereich einer Anströmseite einen mindestens bereichsweise elliptisch begrenzten Konturverlauf aufweist.

Vorrichtungen zur Leitung von Gasströmungen sind in unterschiedlichen Ausführungsformen bekannt und weisen in der Regel einen gerundeten Konturverlauf auf, um eine möglichst gleichmäßige Umströmung zu erreichen. Typischerweise sind Körper, die einer Luftströmung ausgesetzt sind, mit fließenden Konturen im Bereich ihrer Anströmflächen versehen. Verbreitet sind Gestaltungen in Form eines Tropfens oder in Form einer Parabel. Ein gemeinsames Konstruktionsmerkmal der bekannten Ausführungsformen besteht darin, daß im Bereich einer frontalen Auftrittsfläche der Luftströmung eine starke Rundung vorliegt, die eine Kontur ähnlich eines Oberflächensegmentes einer Kugel bereitstellt.

Aus der WO-A 93/12001 ist bereits eine Vorrichtung zur Leitung einer Gasströmung bekannt, die im Bereich einer Anströmseite einen gerundet begrenzten Konturverlauf aufweist und die aus einer Grundstufe sowie mehreren Aufsatzstufen ausgebildet ist. Die Aufsatzstufen besitzen eine relativ zur Grundstufe abschnittsweise winklig verlaufende Außenkontur.

Eine dem oben genannten Stand der Technik sehr ähnliche Konstruktion ist auch aus der WO-A 93/12000 bekannt, es liegt allerdings eine stärker unsymmetrische Gestaltung des Strömungsprofils vor. In der DE 299 04 171 U werden allgemeine technische Grundlagen sowie Ausführungsbeispiele zur Gestaltung von Tragflügeln für Fluggeräte erläutert.

Aufgabe der vorliegenden Erfindung ist es, eine Vorrichtung der einleitend genannten Art derart zu konstruieren, daß ein verringerter Strömungswiderstand bereitgestellt wird.

Diese Aufgabe wird erfindungsgemäß dadurch gelöst, daß die Aufsatzstufe im Bereich einer der Grundstufe abgewandt angeordneten Vorderkante im Bereich der Anströmseite spitzwinklig begrenzt ist, daß die seitlichen Begrenzungen im Bereich der Vorderkante im wesentlichen winklig gegeneinander stoßen, daß die Aufsatzstufe als eine Verjüngung der Grundstufe ausgebildet ist und daß die Anströmseite ausgehend von der Vorderkante in Richtung auf die Grundstufe die mindestens bereichsweise elliptische Begrenzung aufweist

Der stufenförmige Verlauf der Außenkontur führt zu einer erheblichen Reduzierung des wirksamen Strömungswiderstandes. Dieser Effekt resultiert daraus, daß jeweils der durch die Rundung im vorderen Bereich ungünstige Konturverlauf durch eine aufgesetzte Stufe verdeckt wird. Es kann hierdurch ein Kompromiß zwischen einer möglichst kompakten Bauform sowie einer strömungstechnisch idealen unendlich langgestreckten Ausführungsform erreicht werden. Die Definition der relativ zueinander winklig verlaufenden Außenkonturen umfaßt auch räumlich gering dimensionierte gerundete Überleitungen an den jeweiligen Stoßstellen.

Gemäß einer bevorzugten Ausführungsform ist vorgesehen, daß seitliche Begrenzungen der Aufsatzstufe im Bereich ihrer Überleitung in die Grundstufe im wesentlichen senkrecht zu einer Bezugsfläche der Aufsatzstufe orientiert sind und daß sich die Bezugsfläche im wesentlichen senkrecht zur Mittellinie erstreckt.

Eine weitere Verminderung des Strömungswiderstandes kann dadurch erreicht werden, daß mindestens eine der seitlichen Begrenzungen der Aufsatzstufe eine verbindungslinie zwischen der Vorderkante und einer Schnittlinie der weiteren seitlichen Begrenzung mit der Bezugsfläche im wesentlichen rechtwinklig schneidet.

Eine typische Anwendung ist dadurch definiert, daß die Vorrichtung an einem Luftfahrzeug angeordnet ist.

Ebenfalls ist daran gedacht, daß die Vorrichtung an einem Landfahrzeug angeordnet ist.

Ein weiteres Anwendungsgebiet besteht darin, daß die Vorrichtung an einem trassengebundenen Landfahrzeug angeordnet ist.

Eine zusätzliche Beeinflussung des Strömungsverlaufes kann dadurch erfolgen, daß mindestens eine Aufsatzstufe als ein Abschlußsegment ausgebildet ist, das eine Kontur in Form einer elliptisch gebogenen Platte aufweist.

Für eine symmetrische Strömungsteilung erweist es sich als vorteilhaft, daß eine Mittellinie der Grundstufe und die Mittellinie mindestens einer Aufsatzstufe ineinanderfallend angeordnet sind.

Bei speziellen Anwendungen ist es ebenfalls möglich, daß eine Mittellinie der Grundstufe und die Mittellinie mindestens einer Aufsatzstufe relativ zueinander einen Versatz aufweisen.

Konstruktiv wird ebenfalls umfaßt, daß die elliptische Begrenzung der Aufsatzstufe mindestens bereichsweise oval verläuft.

Ebenfalls ist daran gedacht, daß die elliptische Begrenzung der Aufsatzstufe mindestens bereichsweise parabelförmig verläuft.

Eine weitere Variante besteht darin, daß das Abschlußsegment eine im wesentlichen elliptisch gebogene Begrenzungsfläche sowie eine im wesentlichen eben verlaufende Begrenzungsfläche aufweist.

In der Zeichnung sind Ausführungsbeispiele schematisch dargestellt. Es zeigen:
- Fig. 1: einen Querschnitt durch eine Vorrichtung mit Grundstufe sowie einer Aufsatzstufe und mit einander überdeckenden Mittellinien der Grundstufe sowie der Aufsatzstufe,
- Fig. 2: eine Ausführungsform mit Grundstufe sowie zwei Aufsatzstufen und relativ zueinander versetzten Mittellinien,
- Fig. 3: eine Prinzipdarstellung einer Aufsatzstufe mit spitz zulaufendem Endbereich,
- Fig. 4: die Anordnung einer Aufsatzstufe gemäß Fig. 3 im Bereich einer Grundstufe und
- Fig. 5: eine Ausführungsform bei Verwendung einer einseitig begrenzten Aufsatzstufe.

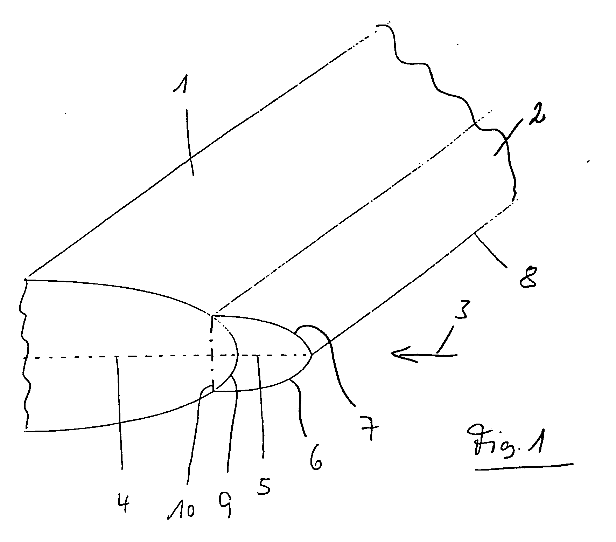

Gemäß der Ausführungsform in Fig. 1 ist eine im wesentlichen parabelförmig begrenzte Grundstufe (1) mit einer bereichsweise elliptisch begrenzten Aufsatzstufe (2) versehen. Die Grundstufe (1) verjüngt sich hierbei entgegen einer Anströmrichtung (3) und die Aufsatzstufe (2) weist ebenfalls eine Verjüngung entgegen der Anströmrichtung (3) auf. Eine Mittellinie (4) der Grundstufe (1) und eine Mittellinie (5) der Aussatzstufe (2) fallen bei dieser Ausführungsform ineinander, so daß die Gesamtanordnung im Hinblick auf die Mittellinien (4,5) eine im wesentlichen symmetrische Gestaltung aufweist.

Die Aufsatzstufe (2) weist seitliche Begrenzungsflächen (6,7) auf, die jeweils mit einem elliptischen Konturverlauf versehen sind und im Bereich einer Vorderkante (8) der Aufsatzstufe (2) winklig zusammenlaufen. Eine Grundseite (9) der Aufsatzstufe (2) weist einen Konturverlauf auf, der an den Konturverlauf der Grundstufe (1) im Bereich der einander zugewandten Begrenzungen angepaßt ist. Die Grundseite (9) überspannt hierdurch wölbungsartig eine Bezugsfläche (10) der Aufsatzstufe (2), die im wesentlichen quer zur Mittellinie (5) orientiert ist.

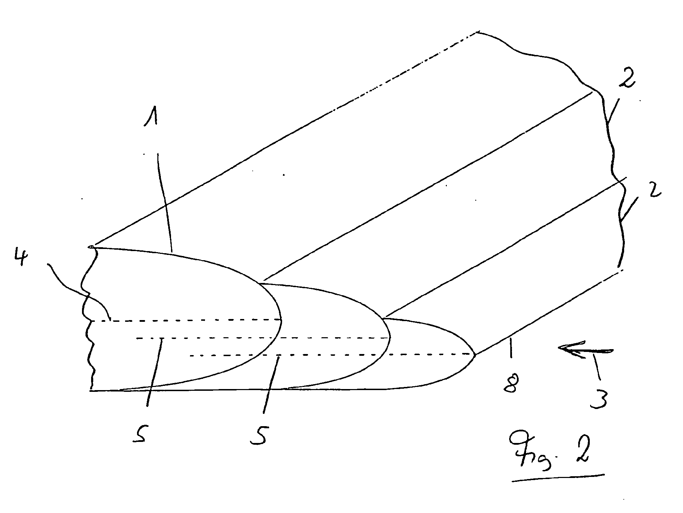

Gemäß der Ausführungsform in Fig. 2 liegen versetzte Mittellinien (4,5) vor. Darüber hinaus ist die Grundstufe (1) mit zwei Aufsatzstufen (2) versehen, wobei die Aufsatzstufen (2) entgegen der Anströmrichtung (3) aufeinander folgen. Der Versatz der Mittellinien (5) ist bei dieser Ausführungsform derart gewählt, daß die in der Zeichnungslinie unteren Begrenzungen der Grundstufe (1) sowie der Aufsatzstufen (2) kontinuierlich ineinander übergeleitet sind, so daß die stufenförmige Überleitung lediglich bei der in der Zeichnung nach oben orientierten Begrenzungsfläche der Gesamtvorrichtung realisiert ist. Die unmittelbar auf die Grundstufe (1) aufgesetzte Aufsatzstufe (2) weist im Bereich ihrer Überleitung in die Grundstufe (1) quer zur Mittellinie (5) einer geringere Dimensionierung auf als die zweite Aufsatzstufe (2) im Bereich ihrer Überleitung in die erste Aufsatzstufe (2).

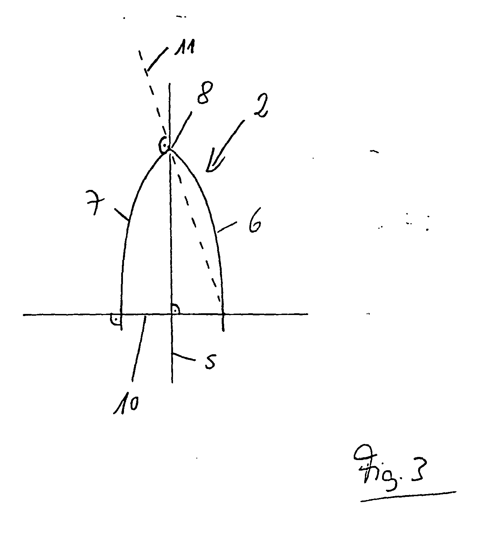

Fig. 3 veranschaulicht eine bevorzugte räumliche Orientierung der seitlichen Begrenzungen (6,7). Insbesondere ist erkennbar, daß die seitlichen Begrenzungen (6,7) die Bezugsfläche (10) im wesentliche in einem rechten winkel schneiden. Darüber hinaus ist zu erkennen, daß die seitlichen Begrenzungen (6,7) im Bereich der Vorderkante (8) eine durch die vorderkante (8) sowie durch die Schnittlinien der seitlichen Begrenzungen (6,7) sowie der Bezugsfläche (10) verlaufende Verbindungslinie (11) im wesentlichen mit einer rechtwinkligen Orientierung schneiden.

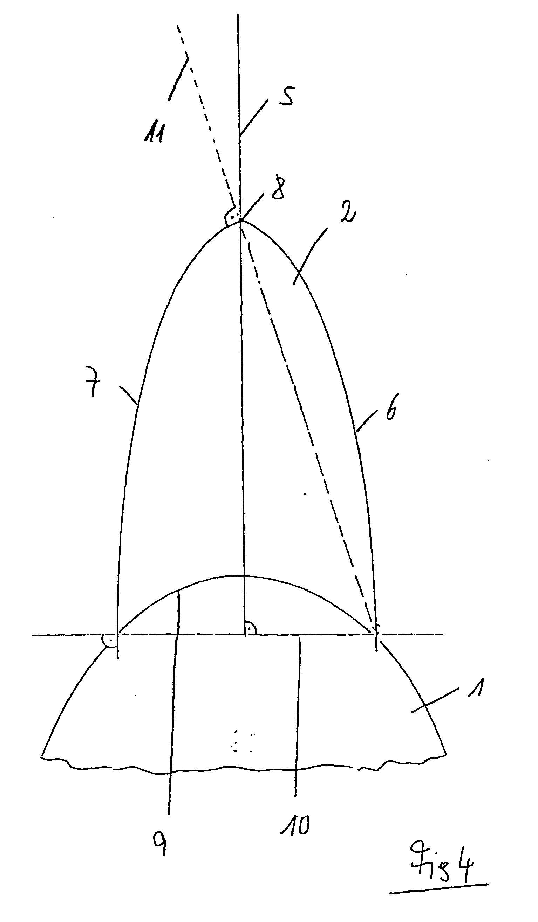

Fig. 4 zeigt die Aufsatzstufe (2) gemäß Fig. 3 nach einer Anordnung im Bereich einer Grundstufe (1). Eine vergleichbare Anordnung könnte ebenfalls als Fortsetzung einer bereits von der Grundstufe (1) getragenen Aufsatzstufe (2) erfolgen.

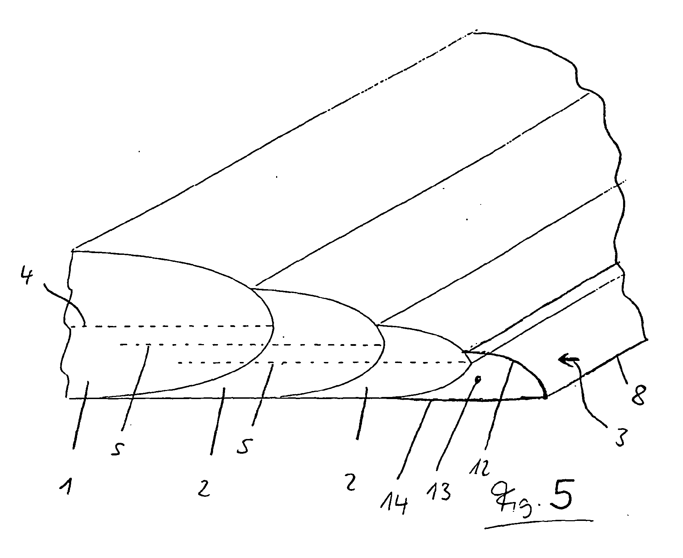

Fig. 5 zeigt eine Ausführungsform, bei der die Grundstufe (1) mit drei aufeinander folgenden Aufsatzstufen (2) versehen ist sowie bei der die entgegen der Strömungsrichtung (3) am entferntesten zur Grundstufe (1) positionierte Aufsatzstufe (2) als ein Abschlußsegment (12) ausgebildet ist, das teilweise eine Kontur in Form einer elliptisch gebogenen Platte aufweist. Das Abschlußsegment (12) begrenzt hierdurch einen Raum (13).

Der Raum (13) weist eine Begrenzungsfläche (14) auf, die im Bereich der Vorderkante (8) die elliptische Begrenzungsfläche des Abschlußsegmentes (12) schneidet. Im Unterschied zu den weiteren Aufsatzstufen (2) weist das Abschlußsegment (12) hierdurch eine unsymmetrische Querschnittgestaltung auf.

Bei einer Anwendung im Bereich von Kraftfahrzeugen ist es beispielsweise möglich, die vorgeschlagene stufenförmige Gestaltung im Bereich von Lenkverbindungen und/oder Radaufhängungen einzusetzen. Bei einer Anwendung für schienengebundene Fahrzeuge kann eine entsprechende stufenförmige Gestaltung im Bereich des Triebkopfes erfolgen. Bei Anwendungen im Bereich der Flugzeugtechnik ist insbesondere daran gedacht, die stufenförmige Gestaltung im Bereich von Tragflächenkanten, Leitwerken und/oder im Bugbereich zu realisieren. Ebenfalls ist es möglich, eine entsprechende Gestaltung im Bereich von Propellern oder Rotoren einzusetzen, beispielsweise bei Helikoptern.

Unter einem eliptischen Verlauf wird insbesondere auch ein zumindest bereichsweise ovaler verlauf oder ein zumindest bereichsweise parabelförmiger Verlauf verstanden. Insbesondere wird hierdurch auch der in Fig. 2 und Fig. 5 dargestellte Verlauf mit abschnittsweise relativ zu den Mittellinien (4, 5) parallel verlaufenden Begrenzungsflächen verstanden.

## Patentansprüche

1. Vorrichtung zur Leitung einer Gasströmung, die eine Grundstufe (1) sowie mindestens eine Aufsatzstufe (2) umfaßt und bei der einander zugewandte Bereiche der Grundstufe (1) sowie der Aufsatzstufe (2) relativ zueinander winklig verlaufende Außenkonturen aufweisen und die im Bereich einer Anströmseite einen mindestens bereichsweise elliptisch begrenzten Konturverlauf aufweist, **dadurch gekennzeichnet, daß** die Aufsatzstufe (2) im Bereich einer der Grundstufe (1) abgewandt angeordneten Vorderkante (8) im Bereich der Anströmseite spitzwinklig begrenzt ist, daß die seitlichen Begrenzungen (6, 7) im Bereich der Vorderkante (8) im wesentlichen winklig gegeneinander stoßen, daß die Aufsatzstufe (2) als eine Verjüngung der Grundstufe (1) ausgebildet ist und daß die Anströmseite ausgehend von der Vorderkante (8) in Richtung auf die Grundstufe (1) die mindestens bereichsweise elliptische Begrenzung aufweist.

2. Vorrichtung nach Anspruch 1, **dadurch gekennzeichnet, daß** seitliche Begrenzungen (6, 7) der Aufsatzstufe (2) im Bereich ihrer Überleitung in die Grundstufe (1) im wesentlichen senkrecht zu einer Bezugsfläche (10) der Aufsatzstufe (2) orientiert sind und daß sich die Bezugsfläche (10) im wesentlichen senkrecht zur Mittellinie (5) erstreckt.

3. Vorrichtung nach Anspruch 1 oder 2, **dadurch gekennzeichnet, daß** mindestens eine der seitlichen Begrenzungen (6, 7) der Aufsatzstufe (2) eine Verbindungslinie zwischen der Vorderkante (8) und einer Schnittlinie der weiteren seitlichen Begrenzung (6, 7) mit der Bezugsfläche (10) im wesentlichen rechtwinklig schneidet.

4. Vorrichtung nach einem der Ansprüche 1 bis 3, **dadurch gekennzeichnet, daß** die Vorrichtung an einem Luftfahrzeug angeordnet ist.

5. Vorrichtung nach einem der Ansprüche 1 bis 3, **dadurch gekennzeichnet, daß** die Vorrichtung an einem Landfahrzeug angeordnet ist.

6. Vorrichtung nach einem der Ansprüche 1 bis 3, **dadurch gekennzeichnet, daß** die Vorrichtung an einem trassengebundenen Landfahrzeug angeordnet ist.

7. Vorrichtung nach einem der Ansprüche 1 bis 6, **dadurch gekennzeichnet, daß** mindestens eine Aufsatzstufe (2) als ein Abschlußsegment (12) ausgebildet ist, das eine Kontur in Form einer elliptisch gebogenen Platte aufweist.

8. Vorrichtung nach einem der Ansprüche 1 bis 7, **dadurch gekennzeichnet, daß** eine Mittellinie (4) der Grundstufe (1) und die Mittellinie (5) mindestens einer Aufsatzstufe (2) ineinanderfallend angeordnet sind.

9. Vorrichtung nach einem der Ansprüche 1 bis 7, **dadurch gekennzeichnet, daß** eine Mittellinie (4) der Grundstufe (1) und die Mittellinie (5) mindestens einer Aufsatzstufe (2) relativ zueinander einen Versatz aufweisen.

10. Vorrichtung nach einem der Ansprüche 1 bis 9, **dadurch gekennzeichnet, daß** die elliptische Begrenzung der Aufsatzstufe (2) mindestens bereichsweise oval verläuft.

11. Vorrichtung nach einem der Ansprüche 1 bis 9, **dadurch gekennzeichnet, daß** die elliptische Begrenzung der Aufsatzstufe (2) mindestens bereichsweise parabelförmig verläuft.

12. Vorrichtung nach einem der Ansprüche 7 bis 11, **dadurch gekennzeichnet, daß** das Abschlußsegment (12) eine im wesentlichen elliptisch gebogene Begrenzungsfläche sowie eine im wesentlichen eben verlaufende Begrenzungsfläche (14) aufweist.

## Claims

1. Device for conveying a gas flow, comprising a base stage (1) and at least one upper stage (2) and in which mutually facing regions of the base stage (1) and of the upper stage (2) have external contours disposed at an angle with respect to one another, and which has an elliptically shaped contour in the region of an intake side, at least in certain regions, **characterised in that**, in the region of a front edge (8) remote from the base stage (1), the upper stage (2) is bounded by an acute angle in the region of the intake side, the lateral boundaries (6, 7) adjoin one another essentially at an angle in the region of the front edge (8), the upper stage (2) is designed as a taper of the base stage (1) and the intake side has an elliptical boundary in at least certain regions starting from the front edge (8) in the direction towards the base stage (1).

2. Device as claimed in claim 1, **characterised in that** lateral boundaries (6, 7) of the upper stage (2) are oriented essentially vertically with respect to a reference surface (10) of the upper stage (2) in the region where they merge into the base stage (1) and the reference surface (10) extends essentially perpendicular to the centre line (5).

3. Device as claimed in claim 1 or 2, **characterised in that** at least one of the lateral boundaries (6, 7) of the upper stage (2) intersects a connecting line between the front edge (8) and an intersection line of the other lateral boundary (6, 7) with the reference surface (10) essentially at a right angle.

4. Device as claimed in one of claims 1 to 3, **characterised in that** the device is disposed on an aircraft.

5. Device as claimed in one of claims 1 to 3, **characterised in that** the device is disposed on a land vehicle.

6. Device as claimed in one of claims 1 to 3, **characterised in that** the device is disposed on a track-bound vehicle.

7. Device as claimed in one of claims 1 to 6, **characterised in that** at least one upper stage (2) is provided in the form of a terminal segment (12), which has a contour in the shape of an elliptically bent plate.

8. Device as claimed in one of claims 1 to 7, **characterised in that** a centre line (4) of the base stage (1) and the centre line (5) of at least one upper stage (2) are disposed coincidentally.

9. Device as claimed in one of claims 1 to 7, **characterised in that** a centre line (4) of the base stage (1) and the centre line (5) of at least one upper stage (2) are offset relative to one another.

10. Device as claimed in one of claims 1 to 9, **characterised in that** the elliptical boundary of the upper stage (2) extends in an oval in at least certain regions.

11. Device as claimed in one of claims 1 to 9, **characterised in that** at least certain regions of the elliptical boundary of the upper stage (2) extend in the shape of a parabola.

12. Device as claimed in one of claims 7 to 11, **characterised in that** the terminal segment (12) has an essentially elliptically bent boundary surface and a boundary surface (14) extending essentially flat.

## Revendications

1. Dispositif pour la conduite d'un flux de gaz qui comprend un étage de base (1) et au moins un étage supérieur (2), et dans lequel des zones de l'étage de base (1), ainsi que de l'étage supérieur (2), orientés les uns vers les autres, présentent des contours formant un angle par rapport les uns aux autres, et qui présente, dans la région d'un côté du flux, un contour limité en forme d'ellipse, au moins par endroits, **caractérisé en ce que** l'étage supérieur (2), dans la région d'un bord avant (8), dans 1a région du côté d'arrivée du flux, orienté à l'opposé de l'étage de base (1), est délimité suivant un angle aigu, et **en ce que** les éléments de délimitation latérale (6, 7), dans la région du bord avant (8), se rejoignent en suivant sensiblement un angle, que l'étage supérieur (2) est conçu en tant qu'effilement de l'étage de base (1), et que le côté d'arrivée du flux présente, à partir du bord avant (8), en direction de l'étage de base (1) la limitation elliptique au moins par endroits.

2. Dispositif selon la revendication 1, **caractérisé en ce que** les limitations latérales (6, 7) de l'étage supérieur (2), dans la région de leur raccordement à l'étage de base (1) sont sensiblement orientées perpendiculairement à une surface de référence (10) de l'étage supérieur (2), et que la surface de référence (10) s'étend sensiblement perpendiculairement par rapport à la ligne médiane (5).

3. Dispositif selon revendication 1 ou 2, **caractérisé en ce qu'**au moins l'une des limitations latérales (6, 7) de l'étage supérieur (2) coupe, sensiblement à angle droit, une ligne de liaison entre le bord avant (8) et une ligne de coupe de l'autre limitation latérale (6, 7), avec la surface de référence (10).

4. Dispositif selon l'une des revendications 1 à 3, **caractérisé en ce que** le dispositif est agencé sur un aéroplane.

5. Dispositif selon l'une des revendications 1 à 3, **caractérisé en ce que** le dispositif est agencé sur un véhicule terrestre.

6. Dispositif selon l'une des revendications 1 à 3, **caractérisé en ce que** le dispositif est agencé sur un véhicule terrestre sur voie fixe.

7. Dispositif selon l'une des revendications 1 à 6, **caractérisé en ce qu'**au moins un étage supérieur (2) est conçu en tant que segment terminal (12) qui présente un contour en forme de plaque cintrée en forme d'ellipse.

8. Dispositif selon l'une des revendications 1 à 7, **caractérisé en ce qu'**une ligne médiane (4) de l'étage de base (1) et la ligne médiane (5) d'au moins un étage supérieur (2) tombent l'une sur l'autre.

9. Dispositif selon l'une des revendications 1 à 7, **caractérisé en ce qu'**une ligne médiane (4) de l'étage de base (1) et la ligne médiane (5) d'au moins un étage supérieur (2) présentent un décalage l'une par rapport à l'autre.

10. Dispositif selon l'une des revendications 1 à 9, **caractérisé en ce que** la limitation elliptique de l'étage supérieur (2) s'étend en forme d'ovale, au moins par sections.

11. Dispositif selon l'une des revendications 1 à 9, **caractérisé en ce que** la limitation elliptique de l'étage supérieur (2) s'étend en forme de parabole, au moins par sections.

12. Dispositif selon l'une des revendications 7 à 11, **caractérisé en ce que** le segment final (12) présente une surface de limitation sensiblement cintrée en forme d'ellipse, ainsi qu'une surface de limitation (14) sensiblement plane.
